# EUROPÄISCHE PATENTSCHRIFT

(11) **EP 1 834 831 B1**
(45) Veröffentlichungstag und Bekanntmachung des Hinweises auf die Patenterteilung: **01.09.2010**
(21) Anmeldenummer: 07005325.1
(22) Anmeldetag: 14.03.2007
(51) Int. Cl.: B60N 2/04

(54) **Kraftfahrzeugsitz und Kraftfahrzeug mit einem solchen Kraftfahrzeugsitz**
Motor vehicle seat and motor vehicle with such a motor vehicle seat
Siège de véhicule automobile et véhicule automobile doté d'un tel siège de véhicule automobile

(30) Priorität: 16.03.2006 DE 10612136
(43) Veröffentlichungstag der Anmeldung: 19.09.2007
(73) Patentinhaber: GM Global Technology Operations, Inc., Detroit, MI 48265-3000 (US)
(72) Erfinder: Maier, Jürgen, 67808 Weitersweiler (DE); Völz, Reimer, 65428 Rüsselsheim (DE)
(74) Vertreter: Strauss, Peter

(56) Entgegenhaltungen:
- EP-A- 0 365 175
- DE-C1- 10 138 459

## Beschreibung

Die vorliegende Erfindung betrifft einen Kraftfahrzeugsitz mit einem Sitz und einem Sitzträger, gemäß dem Oberbegriff des Anspruchs 1. Ein solcher Kraftfahrzeugsitz ist aus der EP 0 365 175 A2 bekannt.

Aus dem Stand der Technik sind Kraftfahrzeugsitze, insbesondere Vordersitze eines Kraftfahrzeuges, bekannt, die einen Sitz mit einem Sitzteil und einem Lehnenteil aufweisen. Die bekannten Sitze sind mit der Unterseite des Sitzteils an einem Sitzträger befestigt, der wiederum an dem Fahrzeugboden befestigt ist. Die bekannten Sitzträger umfassen in der Regel Führungsschienen, entlang derer der Sitz in Sitzrichtung verschoben werden kann.

Ein Kraftfahrzeugsitz ist beispielsweise aus der DE 102004005969 A1 bekannt. Der bekannte Kraftfahrzeugsitz umfasst einen Sitz mit einem Sitzteil und einem Lehnenteil. Der Kraftfahrzeugsitz umfasst ferner eine Sitzträger zur Abstützung des Sitzes an dem Fahrzeugboden, wobei der Sitzträger des bekannten Kraftfahrzeugsitzes im Wesentlichen von einer Konsole gebildet ist. An der Konsole sind Führungsschienen vorgesehen, die derart mit tunnel- und schwellerseitigen Sitzschienen an dem Kraftfahrzeug zusammenwirken, dass die als Sitzträger fungierende Konsole zusammen mit dem daran angeordneten Sitz von einer hinteren in eine vordere Position verschoben werden kann.

Eine alternative Lösung zur Vorverlagerung eines Kraftfahrzeugsitzes ist in der eingangs genannten EP 0 365 175 A2 beschrieben. Der bekannte Kraftfahrzeugsitz umfasst wiederum einen Sitz, der aus einem Sitzteil und einem Lehnenteil zusammengesetzt ist, wobei der Sitz auf einem als Sitzträger fungierenden Rahmen angeordnet ist. Im Gegensatz zu dem zuvor erwähnten Kraftfahrzeugsitz wird der Sitzträger dieses Kraftfahrzeugsitzes jedoch nicht von einer hinteren in eine vordere Position verschoben, sondern vielmehr verschwenkt. Zu diesem Zweck ist anstelle eines Verschiebemechanismus mit Schienen o. ä. ein Schwenkmechanismus vorgesehen, der mindestens einen Schwenkhebel aufweist. Dieser Schwenkhebel ist einerseits an dem Sitzträger und andererseits an dem Kraftfahrzeug angelenkt. Ein ähnlicher Kraftfahrzeugsitz mit Schwenkmechanismus ist ferner in der DE 101 38 459 C1 beschrieben. Die bekannten Kraftfahrzeugsitze mit Schwenkmechanismus haben den Nachteil, dass die Flexibilität bei der Positionierung bzw. Nutzung der zugehörigen Sitze eingeschränkt ist.

Es ist daher eine Aufgabe der vorliegenden Erfindung, einen Kraftfahrzeugsitz mit einem Sitz, einem Sitzträger und einem Schwenkmechanismus für den Sitzträger zu schaffen, bei dem der Sitz besonders flexibel positionierbar bzw. nutzbar ist. Eine weitere Aufgabe der vorliegenden Erfindung besteht darin, ein Kraftfahrzeug mit einem solchen vorteilhaften Kraftfahrzeugsitz zu schaffen.

Diese Aufgabe wird durch die in Patentanspruch 1 bzw. 18 angegebenen Merkmale gelöst. Vorteilhafte Ausführungsformen der Erfindung sind Gegenstand der Unteransprüche.

Der erfindungsgemäße Kraftfahrzeugsitz weist einen Sitz und einen Sitzträger auf. Der Sitz kann sich beispielsweise aus einem Sitzteil, auf dem der Fahrzeuginsasse sitzt, und einem Lehnenteil, gegen das sich der Fahrzeuginsasse mit dem Rücken lehnen kann, zusammensetzen. Der Sitz ist auf dem Sitzträger angeordnet. Der Sitzträger kann von einer hinteren Position in eine nach vorne versetzte vordere Position verschwenkt werden. Zu diesem Zweck ist ein Schwenkmechanismus zum Verschwenken des Sitzträgers vorgesehen, wobei der Schwenkmechanismus mindestens einen Schwenkhebel aufweist, der einerseits an dem Sitzträger und andererseits an dem Kraftfahrzeug angelenkt ist. Die Anlenkung kann beispielsweise jeweils über ein Schwenklager erfolgen. Die Anlenkung an dem Kraftfahrzeug kann beispielsweise unmittelbar oder mittelbar erfolgen. Als Ort der Anlenkung bietet sich vorteilhafterweise der Fahrzeugboden an. Erfindungsgemäß kann der Sitz ferner in Sitzrichtung entlang des Sitzträgers verschoben werden. Hierzu kann der Sitzträger beispielsweise von Führungsschienen gebildet sein, die mit entsprechenden Führungsschienen an dem Sitz zusammenwirken. Unter der Sitzrichtung ist diejenige Richtung zu verstehen, in die der auf dem Sitz sitzende Fahrzeuginsasse blickt. Dies ist normalerweise auch die Fahrtrichtung des Kraftfahrzeugs.

Die Erfindung hat zunächst den Vorteil, dass das Verschwenken des Sitzträgers unabhängig von der Positionierung des Sitzes gegenüber dem Sitzträger erfolgen kann. Diese Positionierung wird vielmehr beibehalten, so dass der Fahrzeuginsasse nach dem Zurückschwenken des Sitzträgers in seine hintere Position sofort wieder auf dem Sitz Platz nehmen kann, ohne die Position des Sitzes auf dem Sitzträger neu einstellen zu müssen. Darüber hinaus ist das Verschwenken des Sitzträgers gegenüber einer translatorischen Bewegung des Sitzträgers insofern von Vorteil, als dass dieses komfortabler und einfacher durchführbar ist. Letzteres führt dazu, dass der Sitzträger sehr schnell von der hinteren in die vordere Position gebracht werden kann, so dass die Vorbereitung zum Beladen eines Kraftfahrzeugs mit einem solchen Kraftfahrzeugsitz schnell durchgeführt werden kann. Insoweit hat der erfindungsgemäße Kraftfahrzeugsitz zunächst dieselben Vorteile wie die bekannten Kraftfahrzeugsitze mit Schwenkmechanismus. Im Gegensatz zu den bekannten Kraftfahrzeugsitzen mit Schwenkmechanismus kann der Sitz des erfindungsgemäßen Kraftfahrzeugsitzes jedoch ferner entlang des verschwenkbaren Sitzträgers in Sitzrichtung verschoben werden. Auf diese Weise kann die Positionierung des Sitzes in Sitzrichtung auch ohne Verschwenken des Sitzträgers erfolgen, so dass eine flexiblere Positionierung bzw. Nutzung des erfindungsgemäßen Kraftfahrzeugsitzes möglich ist.

In einer bevorzugten Ausführungsform des erfindungsgemäßen Kraftfahrzeugsitzes kann der Sitzträger unter Beibehaltung seiner Ausrichtung von der hinteren in die vordere Position verschwenkt werden. Unter der Beibehaltung der Ausrichtung kann beispielsweise verstanden werden, dass der Sitzträger in seiner ursprünglichen horizontalen Anordnung verbleibt.

In einer besonders bevorzugten Ausführungsform des erfindungsgemäßen Kraftfahrzeugsitzes ist ein Arretierungsmittel vorgesehen, mittels dessen der Sitzträger sowohl in der hinteren als auch in der vorderen Position lösbar arretiert werden kann. Das Arretierungsmittel kann sowohl an dem Sitzträger selbst als auch an dem Kraftfahrzeug, vorzugsweise am Kraftfahrzeugboden, vorgesehen sein. Im ersten Fall müssten dementsprechend zwei Gegenstücke an dem Kraftfahrzeug vorgesehen sein, während die Gegenstücke im zweiten Fall an dem Kraftfahrzeugsitz, beispielsweise an dem Sitzträger, angeordnet sein müssten.

In einer weiteren vorteilhaften Ausführungsform des erfindungsgemäßen Kraftfahrzeugsitzes ist das Arretierungsmittel ein Schloss. Vorzugsweise ist das Schloss in der Art eines Heckklappenschlosses ausgebildet. Letztgenannte Schlösser ermöglichen ein einfaches Einrasten eines entsprechenden Gegenstücks.

Um die Verschiebbarkeit des Sitzes entlang des Sitzträgers zu gewährleisten, weist der Sitzträger in einer weiteren vorteilhaften Ausführungsform des erfindungsgemäßen Kraftfahrzeugsitzes Führungsschienen auf. So können beispielsweise sitzseitige Führungsschienen vorgesehen sein, die mit den Führungsschienen des Sitzträgers zusammenwirken bzw. mit diesen in Eingriff stehen.

In einer weiteren vorteilhaften Ausführungsform des erfindungsgemäßen Kraftfahrzeugsitzes weist der Schwenkmechanismus mindestens einen vorderen und einen hinteren Schwenkhebel auf.

Um den Sitzträger in eine nach vorne versetzte vordere Position bringen zu können, können die Schwenkhebel in einer weiteren bevorzugten Ausführungsform des erfindungsgemäßen Kraftfahrzeugsitzes sitzträgerseitig und kraftfahrzeugseitig jeweils um eine Schwenkachse verschwenkt werden, die sich quer zu der Sitzrichtung erstreckt.

Um den Sitzträger bei vorgegebener Länge der Schwenkhebel besonders weit nach vorne in die vordere Position versetzen zu können, weisen die sitzträgerseitigen Enden der Schwenkhebel in einer besonders bevorzugten Ausführungsform des erfindungsgemäßen Kraftfahrzeugsitzes in der hinteren Position des Sitzträgers nach hinten und in der vorderen Position des Sitzträgers nach vorne.

In einer weiteren vorteilhaften Ausführungsform des erfindungsgemäßen Kraftfahrzeugsitzes ist ein rechter vorderer und ein linker vorderer Schwenkhebel sowie ein rechter hinterer und ein linker hinterer Schwenkhebel vorgesehen, wobei der rechte und linke vordere Schwenkhebel über eine vordere Querstrebe verbunden sind, während der rechte und linke hintere Schwenkhebel über eine hintere Querstrebe verbunden sind. Durch die Kopplung der einander zugeordneten Schwenkhebel wird eine höhere Stabilität erzielt und das Verschwenken vereinfacht.

Gemäß einer weiteren vorteilhaften Ausführungsform des erfindungsgemäßen Kraftfahrzeugsitzes ist an der vorderen Querstrebe oder dem Sitzträger ein erstes Rastmittel vorgesehen ist, das in der hinteren Position des Sitzträgers in das Schloss eingerastet ist.

In einer weiteren bevorzugten Ausführungsform des erfindungsgemäßen Kraftfahrzeugsitzes ist das erste Rastmittel als Schließbügel ausgebildet, der eine besonders sichere Verbindung mit dem Arretierungsmittel bzw. Schloss bewirkt. Dies ist insofern wichtig, als dass die Verbindung zwischen dem Schließbügel und dem Schloss auch im Falle eines Unfalls gewährleistet sein muss, zumal sich in der hinteren Position des Sitzträgers ein Fahrzeuginsasse auf dem Sitz befinden kann, was in der vorderen Position nicht der Fall ist.

In einer weiteren bevorzugten Ausführungsform des erfindungsgemäßen Kraftfahrzeugsitzes ist ein zweites Rastmittel an der hinteren Querstrebe vorgesehen, das in der vorderen Position des Sitzträgers in das Schloss eingerastet ist.

In einer besonders bevorzugten Ausführungsform des erfindungsgemäßen Kraftfahrzeugsitzes ist das zweite Rastmittel in der Art eines Stiftes ausgebildet. Hier ist kein stabiler Schließbügel erforderlich, vielmehr reicht ein Stift als zweites Rastmittel aus, zumal sich kein Fahrzeuginsasse auf dem Sitz befindet, wenn der Sitzträger in die vordere Position verschwenkt ist.

Aus dem vorgenannten Grunde ist das erste Rastmittel in einer bevorzugten Ausführungsform des erfindungsgemäßen Kraftfahrzeugsitzes stets fester als das zweite Rastmittel ausgebildet.

In einer weiteren vorteilhaften Ausführungsform des erfindungsgemäßen Kraftfahrzeugsitzes sind an dem Sitzträger, den Querstreben und/oder den Schwenkhebeln Stützen zur Abstützung des Sitzträgers in der hinteren und/oder vorderen Position gegenüber dem Kraftfahrzeug vorgesehen. Hierdurch ist ein sicherer Stand des Kraftfahrzeugsitzes innerhalb des Kraftfahrzeugs gewährleistet.

In einer bevorzugten Ausführungsform des erfindungsgemäßen Kraftfahrzeugsitzes ist der Sitzträger in der hinteren und/oder vorderen Position durch das erste und/oder zweite Rastmittel gegenüber dem Kraftfahrzeug abgestützt. Indem auch das Rastmittel zu Abstützung verwendet wird, was insbesondere bei dem stabilen ersten Rastmittel von Vorteil wäre, kann die Anzahl der anderen Stützen reduziert sein, gegebenenfalls kann gänzlich auf diese verzichtet werden.

Um auch mehr Stauraum oberhalb des Kraftfahrzeugsitzes zu erhalten, was beispielsweise bei besonders langem Ladegut erforderlich sein kann, das sich über den Kraftfahrzeugsitz erstreckt, ist der Sitzträger in der vorderen Position gemäß einer weiteren vorteilhaften Ausführungsform des erfindungsgemäßen Kraftfahrzeugsitzes tiefer als in der hinteren Position angeordnet.

Das erfindungsgemäße Kraftfahrzeug weist einen Kraftfahrzeugsitz der zuvor beschriebenen Art auf, wobei es sich bei dem Kraftfahrzeugsitz vorzugsweise um einen Beifahrersitz handelt.

Die Erfindung wird im Folgenden an Hand einer beispielhaften Ausführungsform unter Bezugnahme auf die beigefügten Zeichnungen näher erläutert. Es zeigen:
- Fig. 1: eine perspektivische Darstellung einer Ausführungsform des erfindungsgemäßen Kraftfahrzeugsitzes mit dem Sitzträger in der hinteren Position,
- Fig. 2: eine schematische Seitenansicht des Kraftfahrzeugsitzes von Fig. 1 und
- Fig. 3: den Kraftfahrzeugsitz von Fig. 2 mit dem Sitzträger in der vorderen Position.

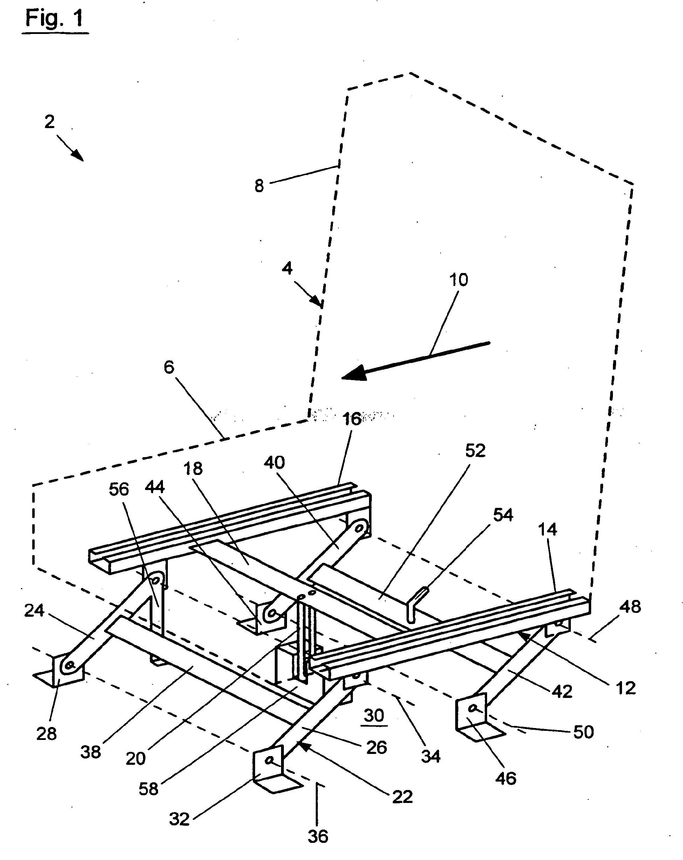

Fig. 1 zeigt eine perspektivische Darstellung des Kraftfahrzeugsitzes 2. Der Kraftfahrzeugsitz 2 weist einen Sitz 4 auf, dessen Kontur in Fig. 1 lediglich durch eine gestrichelte Linie angedeutet ist. Der Sitz 4 weist ein horizontal ausgerichtetes Sitzteil 6 und ein hinten an dem Sitzteil 6 angeordnetes Lehnenteil 8 auf, das sich nach oben erstreckt. Die Sitzrichtung 10 ist diejenige Richtung, in die eine Person blickt, wenn sie auf dem Sitz 4 Platz genommen hat. Die Sitzrichtung 10 entspricht im vorliegenden Beispiel der Fahrtrichtung des Kraftfahrzeugs, zumal es sich bei dem dargestellten Kraftfahrzeugsitz 2 um einen Beifahrersitz handelt.

Das Sitzteil 6 des Sitzes 4 ist mit seiner nach unten weisenden Seite auf einem Sitzträger 12 angeordnet. Der Sitzträger 12 weist zwei seitlich voneinander beabstandete Führungsschienen 14, 16 auf, die sich in Sitzrichtung 10 erstrecken und parallel zueinander angeordnet sind. Die beiden Führungsschienen 14, 16 sind über eine Querstrebe 18 fest miteinander verbunden. In der Mitte der Querstrebe 18 ist ferner ein erstes Rastmittel in Form eines Schließbügels 20 befestigt, der sich ausgehend von der Querstrebe 18 nach unten erstreckt und dessen Funktionsweise später eingehender erläutert wird. An dem Sitzteil 6 sind ferner (nicht dargestellte) Führungsschienen vorgesehen, die derart mit den Führungsschienen 14, 16 des Sitzträgers 12 in Eingriff stehen, dass der Sitz 4 in Sitzrichtung 10 entlang des Sitzträgers 12 nach vorne und zurück geschoben werden kann. Auf diese Weise kann die Position des Sitzes 4 durch den Fahrzeuginsassen gewählt werden.

Unterhalb des Sitzträgers 12 ist ein Schwenkmechanismus 22 zum Verschwenken des Sitzträgers 12 vorgesehen. Der Schwenkmechanismus 22 weist einen rechten vorderen Schwenkhebel 24 und einen linken vorderen Schwenkhebel 26 auf. Der rechte vordere Schwenkhebel 24 ist einerseits an einem vorderen Abschnitt der Führungsschiene 16 und andererseits über einen Winkel 28 an dem Fahrzeugboden 30 des Kraftfahrzeugs angelenkt. Entsprechend ist der linke vordere Schwenkhebel 26 einerseits an einem vorderen Abschnitt der Führungsschiene 14 und andererseits über einen Winkel 32 an dem Fahrzeugboden 30 des Kraftfahrzeugs angelenkt. Die vorderen Schwenkhebel 24, 26 sind dabei derart angelenkt, dass diese sitzträgerseitig um eine gemeinsame Schwenkachse 34 und fahrzeugbodenseitig um eine gemeinsame Schwenkachse 36 verschwenkt werden können, wobei sich die Schwenkachsen 34, 36 rechtwinklig zu der Sitzrichtung 10 erstrecken. Die beiden vorderen Schwenkhebel 24, 26 sind über eine vordere Querstrebe 38 fest miteinander gekoppelt.

Darüber hinaus weist der Schwenkmechanismus 22 einen rechten hinteren Schwenkhebel 40 und einen linken hinteren Schwenkhebel 42 auf. Der rechte hintere Schwenkhebel 40 ist einerseits an einem hinteren Abschnitt der Führungsschiene 16 und andererseits über einen Winkel 44 an dem Fahrzeugboden 30 des Kraftfahrzeugs angelenkt. Entsprechend ist der linke hintere Schwenkhebel 42 einerseits an einem hinteren Abschnitt der Führungsschiene 14 und andererseits über einen Winkel 46 an dem Fahrzeugboden 30 des Kraftfahrzeugs angelenkt. Die hinteren Schwenkhebel 40, 42 sind dabei derart angelenkt, dass diese sitzträgerseitig um eine gemeinsame Schwenkachse 48 und fahrzeugbodenseitig um eine gemeinsame Schwenkachse 50 verschwenkt werden können, wobei sich die Schwenkachsen 48, 50 rechtwinklig zu der Sitzrichtung 10 erstrecken. Die beiden hinteren Schwenkhebel 40, 42 sind über eine hintere Querstrebe 52 fest miteinander gekoppelt. In der Mitte der hinteren Querstrebe 52 ist ein zweites Rastmittel in Form eines gebogenen Stiftes 54 angeordnet, dessen Funktionsweise später eingehender erläutert wird. Der Schließbügel 20 hat bessere Festigkeitseigenschaften als der Stift 54.

An Hand des Schwenkhebels 24 ist beispielhaft für die anderen Schwenkhebel 26, 40, 42 dargestellt, wie der Sitzträger 12 an dem Fahrzeugboden 30 abgestützt werden kann. So ist an dem Schwenkhebel 24 sitzträgerseitig eine Stütze 56 angeordnet, die zusammen mit dem Schwenkhebel 24 um die Schwenkachse 34 verschwenkt werden kann. In der in Fig. 1 dargestellten hinteren Position des Sitzträgers 12 erstreckt sich die Stütze 56 ausgehend von dem Schwenkhebel 24 bis hinunter zu dem Fahrzeugboden 30, um den Sitzträger 12 abzustützen. Entsprechende Stützen können auch an den anderen Schwenkhebeln 26, 40, 42 vorgesehen sein, wobei auf deren Darstellung aus Gründen der Übersichtlichkeit verzichtet wurde.

An dem Fahrzeugboden 30 ist ferner ein Arretierungsmittel in Form eines Schlosses 58 befestigt. Das Schloss 58, das in der Art eines Heckklappenschlosses ausgebildet ist, ist unterhalb des Schwenkmechanismus 22 mittig angeordnet.

Nachstehend werden die weiteren besonderen Merkmale sowie die Funktionsweise des Kraftfahrzeugsitzes 2 unter Bezugnahme auf die Fig. 1 bis 3 beschrieben.

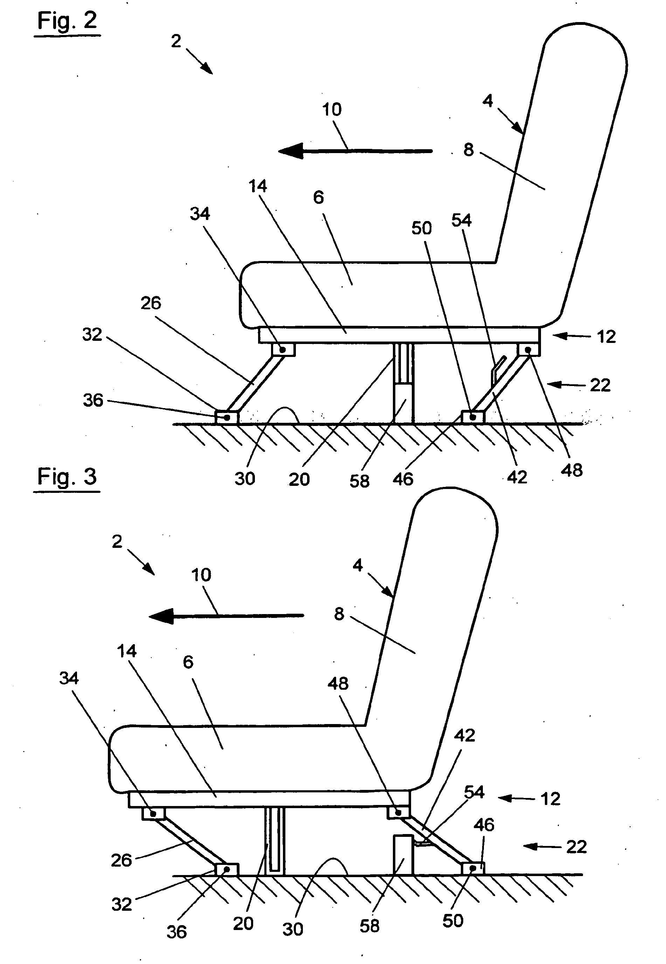

Dank des Schwenkmechanismus 22 kann der Sitzträger 12 von der in den Fig. 1 und 2 gezeigten hinteren Position in eine nach vorne versetzte vordere Position verschwenkt werden, die in Fig. 3 gezeigt ist. In der hinteren Position (Fig. 1 und 2), in der die sitzträgerseitigen Enden der Schwenkhebel 24, 26, 40, 42 schräg nach hinten weisen, ist der Schließbügel 20 in das Schloss 58 eingerastet, so dass der Sitzträger 12 in der gezeigten Position arretiert ist. Lediglich der auf dem Sitzträger 12 angeordnete Sitz 4 kann in Sitzrichtung 10 entlang der Führungsschienen 14, 16 verschoben werden. Sowohl die Stütze 56 als auch der Schließbügel 20 dienen in der hinteren Position des Sitzträgers 12 der Abstützung desselben an dem Fahrzeugboden 30.

Nach dem Entriegeln des Schlosses 58 ist der Schließbügel 20 freigegeben, so dass der Sitzträger 12 von der hinteren Position in die nach vorne versetzte vordere Position verschwenkt werden kann. Zu diesem Zweck Verschwenken die Schwenkhebel 24, 26, 40, 42 um die Schwenkachsen 34, 36, 48, 50. Dabei behält der Sitzträger 12 stets seine Ausrichtung bei. Die Schwenkhebel 24, 26, 40, 42 werden nun so lange verschwenkt, bis der Stift 54 zu dem Schloss 58 gelangt und in dieses einrastet. Damit ist die vordere Position erreicht, in der der Sitzträger 12 ebenfalls mit Hilfe des Schlosses 58 arretiert ist. Der Sitzträger 12 kann demzufolge mit Hilfe nur eines Schlosses 58 sowohl in der hinteren als auch in der vorderen Position lösbar arretiert werden.

In der vorderen Position weisen die sitzträgerseitigen Enden der Schwenkhebel 24, 26, 40, 42 schräg nach vorne, wobei die Schwenkhebel derart weit nach vorne verschwenkt sind, dass der Sitzträger 12 in der vorderen Position tiefer als in der hinteren Position angeordnet ist. Die Abstützung des Sitzträgers an dem Fahrzeugboden 30 erfolgt wiederum durch den Schließbügel 20 und außerdem über den in dem Schloss 58 einliegenden Stift 54.

### Bezugszeichenliste

- 2: Kraftfahrzeugsitz
- 4: Sitz
- 6: Sitzteil
- 8: Lehnenteil
- 10: Sitzrichtung
- 12: Sitzträger
- 14: Führungsschiene
- 16: Führungsschiene
- 18: Querstrebe
- 20: Schließbügel
- 22: Schwenkmechanismus
- 24: rechter vorderer Schwenkhebel
- 26: linker vorderer Schwenkhebel
- 28: Winkel
- 30: Fahrzeugboden
- 32: Winkel
- 34: Schwenkachse
- 36: Schwenkachse
- 38: vordere Querstrebe
- 40: rechter hinterer Schwenkhebel
- 42: linker hinterer Schwenkhebel
- 44: Winkel
- 46: Winkel
- 48: Schwenkachse
- 50: Schwenkachse
- 52: hintere Querstrebe
- 54: Stift
- 56: Stütze
- 58: Schloss

## Patentansprüche

1. Kraftfahrzeugsitz mit einem Sitz (4) und einem Sitzträger (12), wobei der Sitz (4) auf dem Sitzträger (12) angeordnet, der Sitzträger (12) von einer hinteren Position in eine nach vorne versetzte vordere Position verschwenkbar und ein Schwenkmechanismus (22) zum Verschwenken des Sitzträgers (12) vorgesehen ist, der mindestens einen Schwenkhebel (24, 26, 40, 42) aufweist, der einerseits an dem Sitzträger (12) und andererseits an dem Kraftfahrzeug angelenkt ist, **dadurch gekennzeichnet, dass** der Sitz (4) ferner in Sitzrichtung (10) entlang des Sitzträgers (12) verschiebbar ist.

2. Kraftfahrzeugsitz nach Anspruch 1, **dadurch gekennzeichnet, dass** der Sitzträger (12) unter Beibehaltung seiner Ausrichtung von der hinteren in die vordere Position verschwenkbar ist.

3. Kraftfahrzeugsitz nach einem der Ansprüche 1 oder 2, **dadurch gekennzeichnet, dass** ein Arretierungsmittel vorgesehen ist, mittels dessen der Sitzträger (12) sowohl in der hinteren als auch in der vorderen Position lösbar arretierbar ist.

4. Kraftfahrzeugsitz nach Anspruch 3, **dadurch gekennzeichnet, dass** das Arretierungsmittel ein Schloss (58), vorzugsweise in der Art eines Heckklappenschlosses, ist.

5. Kraftfahrzeugsitz nach einem der vorangehenden Ansprüche, **dadurch gekennzeichnet, dass** der Sitzträger (12) Führungsschienen (14, 16) aufweist, entlang derer der Sitz (4) verschiebbar ist.

6. Kraftfahrzeugsitz nach einem der vorangehenden Ansprüche, **dadurch gekennzeichnet, dass** der Schwenkmechanismus (22) mindestens einen vorderen und einen hinteren Schwenkhebel (24, 26; 40, 42) aufweist.

7. Kraftfahrzeugsitz nach einem der vorangehenden Ansprüche, **dadurch gekennzeichnet, dass** die Schwenkhebel (24, 26, 40, 42) sitzträgerseitig und kraftfahrzeugseitig jeweils um eine Schwenkachse (34, 36, 48, 50) verschwenkbar sind, die sich quer zu der Sitzrichtung (10) erstreckt.

8. Kraftfahrzeugsitz nach einem der vorangehenden Ansprüche, **dadurch gekennzeichnet, dass** die sitzträgerseitigen Enden der Schwenkhebel (24, 26, 40, 42) in der hinteren Position des Sitzträgers (12) nach hinten und in der vorderen Position des Sitzträgers (12) nach vorne weisen.

9. Kraftfahrzeugsitz nach einem der vorangehenden Ansprüche, **dadurch gekennzeichnet, dass** ein rechter vorderer und ein linker vorderer Schwenkhebel (24, 26) sowie ein rechter hinterer und ein linker hinterer Schwenkhebel (40, 42) vorgesehen ist, wobei der rechte und linke vordere Schwenkhebel (24, 26) über eine vordere Querstrebe (38) verbunden sind, während der rechte und linke hintere Schwenkhebel (40, 42) über eine hintere Querstrebe (52) verbunden sind.

10. Kraftfahrzeugsitz nach einem der Ansprüche 4 bis 9, **dadurch gekennzeichnet, dass** an der vorderen Querstrebe oder dem Sitzträger (12) ein erstes Rastmittel vorgesehen ist, das in der hinteren Position des Sitzträgers (12) in das Schloss (58) eingerastet ist.

11. Kraftfahrzeugsitz nach Anspruch 10, **dadurch gekennzeichnet, dass** das erste Rastmittel als Schließbügel (20) ausgebildet ist.

12. Kraftfahrzeugsitz nach einem der Ansprüche 4 bis 11, **dadurch gekennzeichnet, dass** ein zweites Rastmittel an der hinteren Querstrebe (52) vorgesehen ist, das in der vorderen Position des Sitzträgers (12) in das Schloss (58) eingerastet ist.

13. Kraftfahrzeugsitz nach Anspruch 12, **dadurch gekennzeichnet, dass** das zweite Rastmittel in der Art eines Stiftes ausgebildet ist.

14. Kraftfahrzeugsitz nach einem der Ansprüche 9 bis 13, **dadurch gekennzeichnet, dass** das erste Rastmittel fester als das zweite Rastmittel ausgebildet ist.

15. Kraftfahrzeugsitz nach einem der vorangehenden Ansprüche, **dadurch gekennzeichnet, dass** an dem Sitzträger, den Querstreben und/oder den Schwenkhebeln (24, 26, 40, 42) Stützen (56) zur Abstützung des Sitzträgers (12) in der hinteren und/oder vorderen Position gegenüber dem Kraftfahrzeug vorgesehen sind.

16. Kraftfahrzeugsitz nach einem der Ansprüche 9 bis 15, **dadurch gekennzeichnet, dass** der Sitzträger (12) in der hinteren und/oder vorderen Position durch das erste und/oder zweite Rastmittel gegenüber dem Kraftfahrzeug abgestützt ist.

17. Kraftfahrzeugsitz nach einem der vorangehenden Ansprüche, **dadurch gekennzeichnet, dass** der Sitzträger (12) in der vorderen Position tiefer als in der hinteren Position angeordnet ist.

18. Kraftfahrzeug mit einem Kraftfahrzeugsitz (2) nach einem der vorangehenden Ansprüche.

19. Kraftfahrzeug nach Anspruch 18, **dadurch gekennzeichnet, dass** der Kraftfahrzeugsitz (2) ein Beifahrersitz ist.

## Claims

1. A motor vehicle seat, comprising a seat (4) and a seat support (12), with the seat (4) being arranged on the seat support (12), the seat support (12) being swivelable from a rear position to a forwardly offset front position, and a swiveling mechanism (22) for swiveling the seat support (12) is provided which comprises at least one swiveling lever (24, 26, 40, 42) which is linked on the one hand to the seat support (12) and on the other hand to the motor vehicle, **characterized in that** the seat (4) is further displaceable along the seat support (12) in the direction of the seat (10).

2. A motor vehicle seat according to claim 1, **characterized in that** the seat support (12) can be swiveled from the rear to the front position while maintaining its alignment.

3. A motor vehicle seat according to one of the claims 1 or 2, **characterized in that** a retaining means is provided, by means of which the seat support (12) can be locked in a detachable manner both in the rear and also the front position.

4. A motor vehicle seat according to claim 3, **characterized in that** the retaining means is a lock (58), preferably in the manner of a tailgate lock.

5. A motor vehicle seat according to one of the preceding claims, **characterized in that** the seat support (12) comprises guide rails (14, 16), along which the seat (4) is displaceable.

6. A motor vehicle seat according to one of the preceding claims, **characterized in that** the swiveling mechanism (22) comprises at least one front and one rear swiveling lever (24, 26; 40, 42).

7. A motor vehicle seat according to one of the preceding claims, **characterized in that** the swiveling levers (24, 26, 40, 42) are each swivelable about a swiveling axis (34, 36, 48, 50) on the side of the seat support and the side of the motor vehicle, which axis extends transversally to the direction (10) of the seat.

8. A motor vehicle seat according to one of the preceding claims, **characterized in that** the ends of the swiveling levers (24, 26, 40, 42) on the side of the seat support face to the rear in the rear position of the seat support (12) and to the front in the front position of the seat support (12).

9. A motor vehicle seat according to one of the preceding claims, **characterized in that** a right front and left front swiveling lever (24, 26) and a right rear and left rear swiveling lever (40, 42) are provided, with the right and left front swiveling lever (24) being connected via a front cross member (38), whereas the right and left rear swiveling lever (40, 42) are connected via a rear cross member (52).

10. A motor vehicle seat according to one of the claims 4 to 9, **characterized in that** a first latching means is provided on the front cross member or the seat support (12), which latching means is latched into the lock (58) in the rear position of the seat support (12).

11. A motor vehicle seat according to claim 10, **characterized in that** the first latching means is arranged as a U-shaped clamp (20).

12. A motor vehicle seat according to one of the claims 4 to 11, **characterized in that** a second latching means is provided on the rear cross member (52) which is latched in the lock (58) in the front position of the seat support (12).

13. A motor vehicle seat according to claim 12, **characterized in that** the second latching means is arranged in the manner of a pin.

14. A motor vehicle seat according to one of the claims 9 to 13, **characterized in that** the first latching means is arranged to be stronger than the second latching means.

15. A motor vehicle seat according to one of the preceding claims, **characterized in that** supports (56) for supporting the seat support (12) in the rear and/or front position in relation to the motor vehicle are provided on the seat support, the cross members and/or the swiveling levers (24, 26, 40, 42).

16. A motor vehicle seat according to one of the claims 9 to 15, **characterized in that** the seat support (12) is supported in the rear and/or front position by the first and second latching means in relation to the motor vehicle.

17. A motor vehicle seat according to one of the preceding claims, **characterized in that** the seat support (12) is arranged to be lower in the front position than in the rear position.

18. A motor vehicle with a motor vehicle seat (2) according to one of the preceding claims.

19. A motor vehicle according to claim 18, **characterized in that** the motor vehicle seat (2) is a passenger seat.

## Revendications

1. Siège de véhicule à moteur avec un siège (4) et un châssis de siège (12) , dans lequel le siège (4) est disposé sur le châssis de siège (12), le châssis de siège (12) peut pivoter d'une position arrière à une position avant décalée vers l'avant et un mécanisme de pivotement (22) est prévu pour faire pivoter le châssis de siège (12) et comporte au moins un levier pivotant (24, 26, 40, 42) qui est articulé d'une part sur le châssis de siège (12) et d'autre part sur le véhicule à moteur, **caractérisé en ce que** le siège (4) est en outre capable de translation dans le sens de l'assise (10) le long du châssis de siège (12).

2. Siège de véhicule à moteur selon la revendication 1, **caractérisé en ce que** le châssis de siège (12) peut pivoter de la position arrière à la position avant en conservant son orientation.

3. Siège de véhicule à moteur selon l'une des revendications 1 ou 2, **caractérisé en ce qu'**il est prévu un moyen de blocage au moyen duquel le châssis de siège (12) peut être bloqué dans la position avant aussi bien que la position arrière avec possibilité de déblocage.

4. Siège de véhicule à moteur selon la revendication 3, **caractérisé en ce que** le moyen de blocage est une serrure (58), de préférence du type d'une serrure de capot arrière.

5. Siège de véhicule à moteur selon l'une des revendications précédentes, **caractérisé en ce que** le châssis de siège (12) présente des rails de guidage (14, 16) le long desquels le siège (4) est capable de translation.

6. Siège de véhicule à moteur selon l'une des revendications précédentes, **caractérisé en ce que** le mécanisme de pivotement (22) présente au moins un levier pivotant avant et un levier pivotant arrière (24, 26 ; 40, 42).

7. Siège de véhicule à moteur selon l'une des revendications précédentes, **caractérisé en ce que** les leviers pivotants (24, 26, 40, 42) peuvent pivoter du côté du châssis de siège et du côté du véhicule à moteur autour d'un axe de pivotement (34, 36, 48, 50) qui s'étend perpendiculairement à la direction de l'assise (10).

8. Siège de véhicule à moteur selon l'une des revendications précédentes, **caractérisé en ce que** les extrémités côté châssis de siège des leviers pivotants (24, 26, 40, 42) sont orientés vers l'arrière quand le châssis de siège (12) est dans la position arrière et vers l'avant quand le châssis de siège (12) est dans la position avant.

9. Siège de véhicule à moteur selon l'une des revendications précédentes, **caractérisé en ce qu'**il est prévu un levier pivotant avant droit et un levier pivotant avant gauche (24, 26) ainsi qu'un levier pivotant arrière droit et un levier pivotant arrière gauche (40, 42), les leviers pivotants avant droit et gauche (24, 26) étant reliés par une traverse avant (38), tandis que les leviers pivotants arrière droit et gauche (40, 42) sont reliés par une traverse arrière (52).

10. Siège de véhicule à moteur selon l'une des revendications 4 à 9, **caractérisé en ce qu'**il est prévu sur la traverse avant ou le châssis de siège (12) un premier moyen d'encliquetage, qui est encliqueté dans la serrure (58) quand le châssis de siège (12) est dans la position arrière.

11. Siège de véhicule à moteur selon la revendication 10, **caractérisé en ce que** le premier moyen d'encliquetage est réalisé comme un étrier de fermeture (20).

12. Siège de véhicule à moteur selon l'une des revendications 4 à 11, **caractérisé en ce qu'**il est prévu sur la traverse arrière (52) un deuxième moyen d'encliquetage, qui est encliqueté dans la serrure (58) quand le châssis de siège (12) est dans la position avant.

13. Siège de véhicule à moteur selon la revendication 12, **caractérisé en ce que** le deuxième moyen d'encliquetage est conformé comme une goupille.

14. Siège de véhicule à moteur selon l'une des revendications 9 à 13, **caractérisé en ce que** le premier moyen d'encliquetage est plus solide que le deuxième moyen d'encliquetage.

15. Siège de véhicule à moteur selon l'une des revendications précédentes, **caractérisé en ce qu'**il est prévu sur le châssis de siège, les traverses et/ou les leviers pivotants (24, 26, 40, 42) des supports (56) pour supporter le châssis de siège (12) dans la position arrière et/ou avant par rapport au véhicule à moteur.

16. Siège de véhicule à moteur selon l'une des revendications 9 à 15, **caractérisé en ce que** le châssis de siège (12) est supporté par rapport au véhicule à moteur dans la position avant et/ou arrière par le premier et/ou le deuxième moyen d'encliquetage.

17. Siège de véhicule à moteur selon l'une des revendications précédentes, **caractérisé en ce que** le châssis de siège (12) est disposé plus bas dans la position avant que dans la position arrière.

18. Véhicule à moteur avec un siège de véhicule à moteur (2) selon l'une des revendications précédentes.

19. Véhicule à moteur selon la revendication 18, **caractérisé en ce que** le siège de véhicule à moteur (2) est un siège de passager.
